# EUROPÄISCHE PATENTSCHRIFT

(11) **EP 1 497 147 B1**
(45) Veröffentlichungstag und Bekanntmachung des Hinweises auf die Patenterteilung: **14.06.2006**
(21) Anmeldenummer: 03747120.8
(22) Anmeldetag: 24.04.2003
(51) Int. Cl.: B60H 1/34, F24F 13/12

(54) **BEL FTUNGSEINRICHTUNG**
VENTILATION UNIT
SYSTEME DE VENTILATION

(30) Priorität: 24.04.2002 DE 10219053
(43) Veröffentlichungstag der Anmeldung: 19.01.2005
(73) Patentinhaber: Faurecia Innenraum Systeme GmbH, 76767 Hagenbach (DE)
(72) Erfinder: JAHN, Thomas, 76694 Forst bei Bruchsal (DE); METZ, Peter, 67482 Freimersheim (DE); DOLL, Volker, 76829 Ranschbach (DE)
(74) Vertreter: Pfenning, Meinig & Partner GbR
(86) Internationale Anmeldenummer: PCT/EP2003/004267
(87) Internationale Veröffentlichungsnummer: WO 2003/091049

(56) Entgegenhaltungen:
- EP-A- 0 455 566
- EP-A- 0 717 247
- DE-A- 3 001 163
- US-A- 4 562 957

## Beschreibung

Die vorliegende Erfindung betrifft eine Belüftungseinrichtung wie offenbart in US 4562957.

Es ist bereits bekannt, Kraftfahrzeuginnenräume durch nach dem Willen des Benutzers zu öffnende bzw. zu schließende Belüftungskanäle mit Frischluft zu versorgen. Bekannte Systeme weisen z.B. Schwenklamellen auf, welche von einem Luftzuführkanal gespeist werden und z.B. durch eine Drehklappe im Luftzuführkanal geschlossen werden können. Es ist auch möglich, die Richtung des Luftstroms durch Schwenken der Lamellen zu erreichen.

Prinzipiell arbeitet dieses bekannte System zufriedenstellend. Nachteile ergeben sich allerdings durch den großen Platzbedarf sowie die unter Umständen aufwendige Gestaltung von Verschluss- bzw. Schwenkmechanismen. Ein weiterer Nachteil besteht darin, dass ein direktes Anströmen der Fahrzeuginsassen durch die gerichtete Luftströmung oft als unangenehm empfunden wird.

Der vorliegenden Erfindung liegt daher die Aufgabe zugrunde, eine Belüftungseinrichtung zu schaffen, welche raumsparend und konstruktiv einfach herstellbar ist und außerdem verschiedene, für den Fahrzeuginsassen angenehme Luftströmungsrichtungen realisierbar macht.

Diese Aufgabe wird durch eine Belüftungseinrichtung nach Patentanspruch 1 gelöst.

Somit sind unterschiedliche Verschiebungszustände zur Einstellung vorgegebener Ausströmwinkel leicht einstellbar. Die hierfür relativ zueinander beweglichen ersten und zweiten Bauteile können konstruktiv sehr einfach gehalten sein und bieten trotzdem eine Vielzahl von Möglichkeiten zur Belüftung des Kraftfahrzeuges. So ist es einfach möglich, eine Belüftung Klimatisierung des Innenraums mit einem gerichteten Luftstrom zu versehen (auf die Herstellung diffuser Luftströme wird weiter unten eingegangen). Außerdem ist es leicht möglich, eine Enteisung ("Defrostung") der Windschutzscheibe mit einem gerichteten Luftstrom zu erreichen. Ein weiterer Vorteil besteht darin, dass bei dieser einfachen konstruktiven Ausführung die Ausströmöffnung über die gesamte Breite der Instrumententafel und somit des Fahrzeuginnenraums herstellbar ist. Außerdem ist eine kleinere Fläche zur Luftversorgung im von den Armen der Kraftfahrzeuginsassen erreichbaren Bereich notwendig, so dass die frei werdende Fläche anderweitig (z.B. für Navigationssysteme etc.) genutzt werden kann.

Zusammenfassend bietet also die Erfindung die Vorteile, dass sie platzsparend und kostengünstig ist, eine einfache Montage und Demontage ermöglicht, dass sie in Modulbauweise herstellbar ist, sowie eine bessere Bedienergonomie sowie einen besseren "thermischen Komfort" im Innenraum des Fahrzeugs verwirklichen kann.

Vorteilhafte Weiterbildungen der vorliegenden Erfindung werden in den abhängigen Ansprüchen angegeben.

Eine vorteilhafte Weiterbildung sieht vor, dass das erste und/oder zweite Bauteil eine Gitterform aufweisen. Hiermit ist leicht möglich, mehrere parallel zueinander angeordnete Ausströmkanäle auf einer großen Länge zu verwirklichen, die z.B. im Eckbereich zwischen Instrumententafel und Windschutzscheibe moderner Kraftfahrzeuge gut unterbringbar sind.

Hierbei können die Stege der Gitter unterschiedliche Formen aufweisen, vorteilhaft sind prismatische Formen, welche über die Länge eines Belüftungskanals (z.B. entlang der gesamten Oberseite der Instrumententafel) einen in etwa gleichen Querschnitt aufweisen. Hierbei ist es konstruktiv besonders einfach, dreieckförmige oder parallelogrammförmige Querschnitte der Stege zu realisieren.

Eine weitere vorteilhafte Weiterbildung sieht vor, dass z.B. das erste Bauteil feststehend und das zweite Bauteil gegenüber diesem beweglich ist. Selbstverständlich ist auch eine umgekehrte Anordnung möglich. Prinzipiell gibt es verschiedene Möglichkeiten, das erste sowie das zweite Bauteil relativ zueinander zu bewegen. In Frage kommen hier relative Schwenkbewegungen oder auch translatorische Verschiebungen in einer oder auch zwei (möglicherweise, aber nicht notwendigerweise orthogonalen) Richtungen. Wichtig ist hierbei lediglich, dass die zugeordneten Schließflächen der ersten und zweiten Bauteile jeweils miteinander in Berührung kommen, um so die Luftströmungen mit einem feststehenden Ausströmwinkel zu beaufschlagen.

Prinzipiell kann hierbei die Relativbewegung des ersten und zweiten Bauteils auf verschiedenste Weise realisiert werden (siehe Beispiele in der Beschreibung). Es sind hier manuelle sowie auch elektromotorische Verstellmöglichkeiten gegeben.

Eine besonders vorteilhafte Weiterbildung sieht vor, dass zwischen ersten und zweitem Bauteil zwei Verschiebungszustände einstellbar sind, wobei im ersten Verschiebungszustand die Luftströmung stärker zum Zentrum des Fahrzeuginnenraums hin gerichtet ist (normale Innenraumklimatisierung für Insassen) und im zweiten Verschiebungszustand eine Luftströmung zur Windschutzscheibe hin gerichtet ist ("defrost") zum Enteisen der Windschutzscheibe.

Eine besonders vorteilhafte Weiterbildung sieht vor, dass noch ein weiterer Verschiebungszustand möglich ist, bei welchem keine der Schließflächen aneinander liegen. In diesem Falle wird kein definierter Ausströmwinkel vorgegeben, da die Bauteile in einer "Zwischenstellung" bzw. "Mittelstellung" zwischen zwei unterschiedlichen Verschiebungszuständen mit jeweils fest definierten Ausströmwinkeln liegen. Der Vorteil an dieser Stellung ist, dass ein "diffuser" Luftstrom leicht erzeugt werden kann, welche keine direkte Anströmung der Insassen mit sich bringt und somit subjektiv von den Insassen als angenehm empfunden wird.

Eine andere Weiterbildung sieht vor, dass ein weiterer Verschiebungszustand einstellbar ist, bei welchem die Schließflächen (d.h. Seitenflächen von komplementären Dreiecken bzw. Parallelogrammen in den Querschnittsformen der Stege des ersten sowie zweiten Bauteils) sämtlich aneinander liegen. Hierdurch ist eine Verschließung des Ausströmbereichs möglich, um so auf eine einfache Weise mit nur zwei gegeneinander verschieblichen Bauteilen sowohl das komplette Verschließen der Belüftungseinrichtung als auch das Einstellen verschiedener Ausströmwinkel sowie eines diffusen Ausströmens zu ermöglichen. Der Verschluss, bei welchem sämtliche Schließflächen aneinanderliegen, erfolgt vorzugsweise durch eine Verschiebung des zweiten Bauteils in einer Höhenrichtung senkrecht zur Ausströmebene. Durch seitliche Verschiebung von ersten und zweiten Bauteil in der Ausströmebene werden jeweils unterschiedliche Schließflächen zueinander in Berührung gebracht, so dass hiermit eine Lüftungsrichtung bestimmt werden kann, durch eine Höhenverschiebung findet eine Regulierung vom vollkommenen offenen Zustand bis zum Verschluss statt.

Eine weitere Weiterbildung sieht als Alternative hierzu vor, dass ein drittes Bauteil (z.B. gitterförmig) vorgesehen ist, welches zum Verschließen des Ausströmbereichs unabhängig von den Bewegungszuständen des ersten und/oder zweiten Bauteils beweglich ist. Es handelt sich hierbei quasi um eine verschiebliche Abdeckklappe, welche ober- bzw. unterhalb des ersten und zweiten Bauteils angeordnet ist und somit ein Verschließen der Belüftungseinrichtung ermöglicht.

Bei der Materialwahl für die Belüftungseinrichtung sind verschiedenste Werkstoffe möglich, Hier bietet es sich an, das erste bzw. zweite Bauteil als festen Bestandteil der Instrumententafel vorzusehen, so dass bereits beim Herstellungsprozess eine entsprechende Gitter- bzw. Stegstruktur hergestellt werden kann. Dies ist z.B. aus üblichen Kunststoffen (Polypropylen etc.) möglich. Selbstverständlich ist es auch möglich, bei besonders hohen Anforderungen an die Temperatur- und Stabilitätsbeständigkeit Metalldruckgussteile vorzusehen, z.B. Aluminiumdruckgussteile.

Eine weitere vorteilhafte Weiterbildung sieht vor, dass das erste und/oder das zweite Bauteil als im Wesentlichen ebene Gitter ausgeführt sind und mindestens zwei Verschiebungszustände, bei denen jeweils unterschiedliche Schließflächen des ersten und des zweiten Bauteils aneinanderliegen, in einer Ebene angeordnet sind. Die Verschiebungszustände, welche unterschiedliche Strömungsrichtungen (beispielsweise Windschutzscheibe oder Fahrzeuginnenraum) belüften, liegen also auf dem selben Höhenniveau, die Bauteile sind also quasi "ineinandergreifend" bzw. "alternierend" angeordnet und nicht übereinander. Durch eine zusätzlich vorzusehende Höhenverschiebung des ersten oder zweiten Bauteils kann der Luftstrom außerdem noch in seiner Stärke (bis hin zu einem vollständigen Verschluss) eingestellt werden.

Eine weitere vorteilhafte Weiterbildung sieht vor, dass das erste und das zweite Bauteil im Wesentlichen prismatisch und/oder längsgitterförmig ausgestaltet sind und Stege des ersten und zweiten Bauteils alternierend zueinander angeordnet sind. Selbstverständlich ist es auch möglich, lediglich einen einzigen Steg vorzusehen, welcher zum Beispiel zu dem zweiten Bauteil gehört und welcher beweglich zwischen zwei Stegen des ersten Bauteils ist. Vorteilhaft sind jedoch mehrere Stege, weil hieraus eine besonders großflächige Strömung erhältlich ist.

Weitere vorteilhafte Weiterbildungen sehen Mechanismen zur Relativbewegung des ersten und des zweiten Bauteils zueinander vor. Diese sehen vor, dass das zweite Bauteil an einem Träger befestigt ist, wobei der Träger so geführt ist, dass das zweite Bauteil gegenüber dem ersten Bauteil seitlich und/oder in der Höhe verschieblich ist. Hierzu sind mehreren Ausführungsformen möglich.

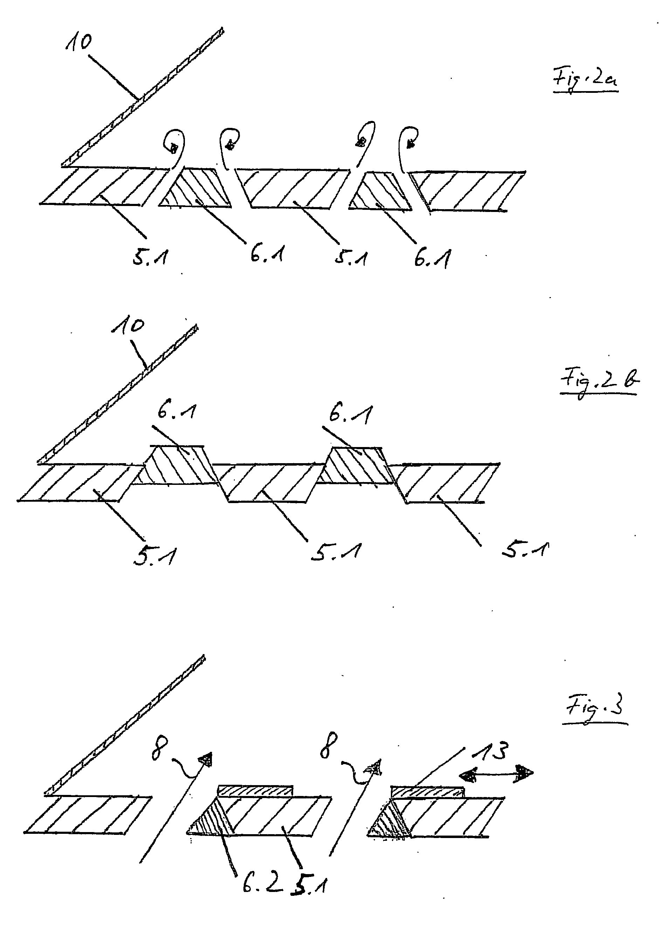

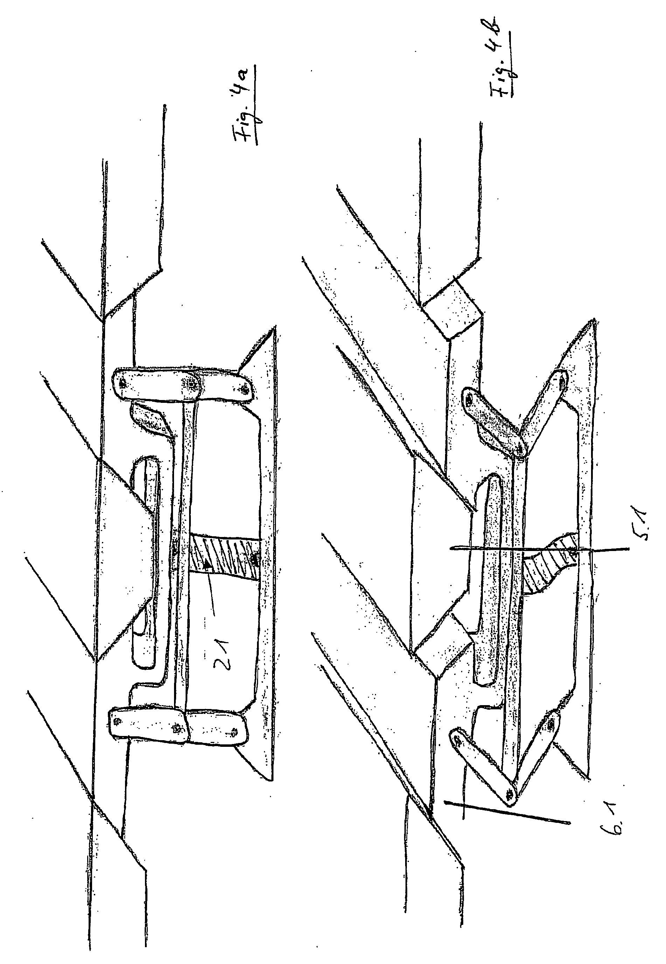

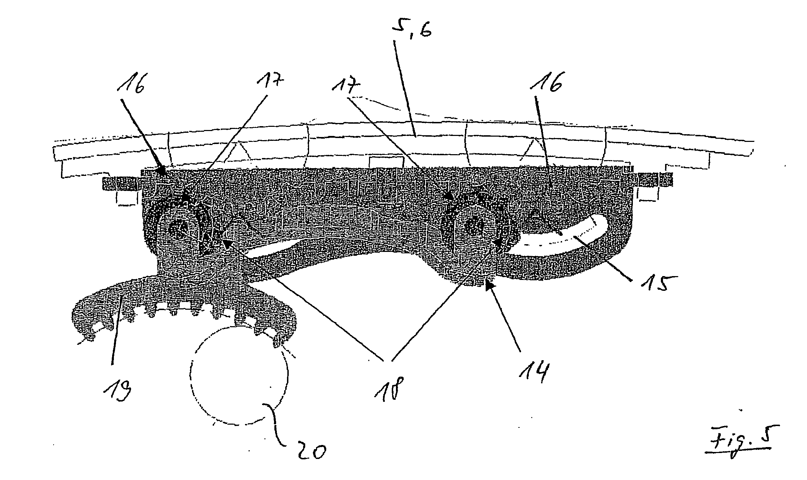

In einer ersten Ausführungsform ist der Träger über ein z.B. federgestütztes Doppelgelenk geführt. Durch Einknicken der Doppelgelenke (vorzugsweise zwei, welche über einen Steg miteinander verbunden sind) können beliebige Schließzustände (Strömung Windschutzscheibe, Strömung Innenraum sowie dazwischenliegend Verschluss, s. insbesondere Fign. 4a und 4b) erreicht werden.

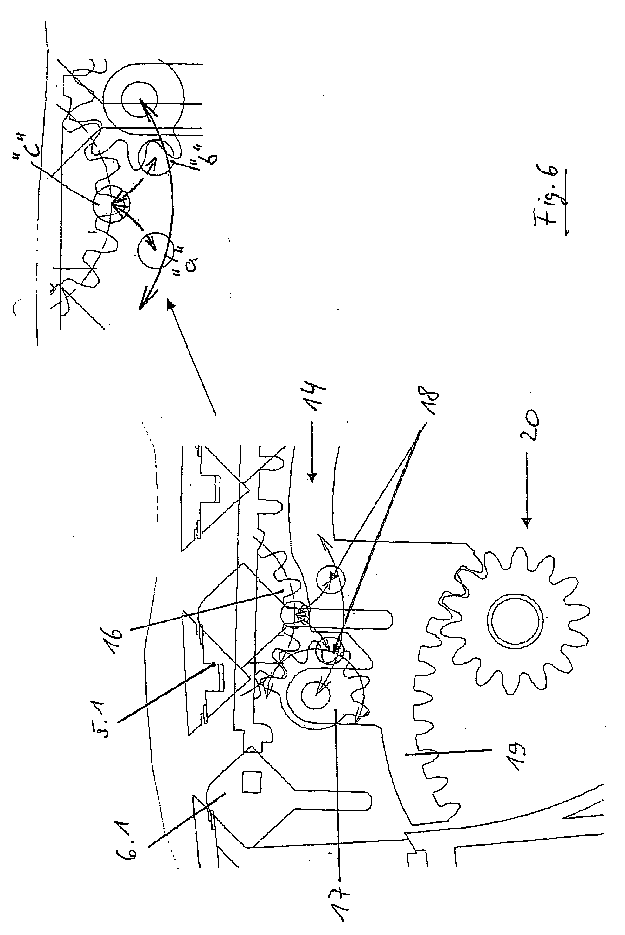

Eine zweite Ausführungsform sieht vor, dass der Träger über bewegliche Reibpaarungen, vorzugsweise Zahnräder, mit dem ersten Bauteil verbundenen Elementen beweglich verbunden ist (s. Fign. 5-9). Hierfür sorgt eine erste Reibpaarung für eine Verbindung des Träger mit einem Antrieb, beispielsweise einem Schrittmotor. Eine zweite Reibpaarung sorgt für die Verbindung des Trägers mit dem ersten Bauteil bzw. mit dem ersten Bauteil verbundenen Elementen. Hierbei kann es vorteilhaft sein, über die Führung der Reibpaarungen hinaus eine zusätzliche Führungsschiene des Trägers bezüglich des ersten Bauteils vorzusehen.

Diese Ausführungsform hat den großen Vorteil, dass praktisch beliebige Bewegungsführungen vom zweiten Bauteil bezüglich des ersten Bauteils möglich sind. Hierbei ist besonders vorteilhaft, dass der Träger hierzu so geführt ist, dass eine epizykloide Bewegung vollführt, wobei in einen Verschiebungszustand nur erste Schließflächen des ersten und zweiten Bauteils aneinanderliegen, in einem zweiten Verschiebungszustand nur zweite Schließflächen des ersten und zweiten Bauteils aneinanderliegen und in einem dazwischenliegenden Bewegungszustand erste und zweite Schließflächen gleichzeitig aneinanderliegen. Hierzu kann z.B. in einem ersten Bewegungszustand die Windschutzscheibe angeströmt werden, in dem zweiten Bewegungszustand der Innenraum und in dem dazwischenliegenden Bewegungszustand ein Verschluss stattfinden. Die epizykloide Bewegung des Trägers sorgt hierbei dafür, dass einerseits gleichzeitig eine seitliche Verschiebung und eine Höhenverschiebung gewährleistet ist und andererseits eine Annäherung der Schließflächen aneinander mit einer geringstmöglichen Relativreibung folgt, so dass die Schließflächen nicht durch Reibung sich abnützen und somit unansehnlich bzw. weniger luftdicht werden.

Weitere vorteilhafte Weiterbildungen der vorliegenden Erfindung werden in den übrigen Ansprüchen angegeben.

Die Erfindung wird nun anhand mehrerer Figuren erläutert. Es zeigen:
- Fign. 1a und 1b: zwei Verschiebungszustände einer erfindungsgemäßen Belüftungseinrichtung,
- Fig. 2a: eine erfindungsgemäße Belüftungseinrichtung in einer "Zwischenstellung" zur Erzeugung diffuser Luftströmung,
- Fig. 2b: die erfindungsgemäße Belüftungseinrichtung im verschlossenen Zustand,
- Fig. 3: eine weitere Variante einer erfindungsgemäßen Belüftungseinrichtung,
- Fign. 4a und 4b: Bewegungszustände einer ersten Ausfühungsforme eines Bewegungsmechanismusses für die aneinanderliegenden Stege,
- Fign. 6-9: Details einer zweiten Ausführungsform eines Bewegungsmechanismusses für aneinanderliegende Stege.

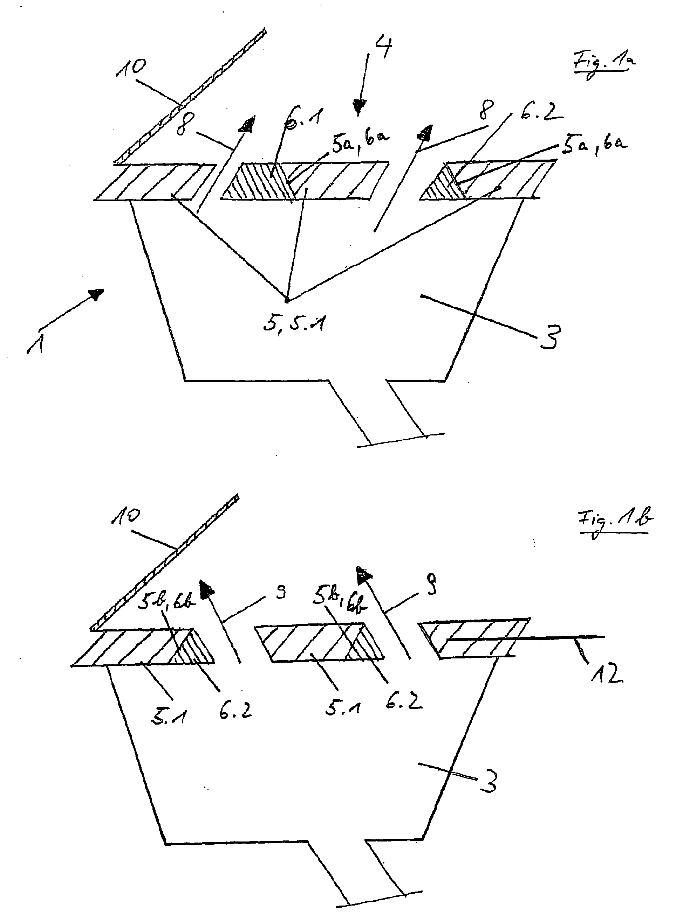

Fig. 1a zeigt eine erfindungsgemäße Belüftungseinrichtung 1. Diese ist innerhalb eines Kraftfahrzeuginnenraums 2 untergebracht, welcher nach vorne von einer Windschutzscheibe 10 begrenzt wird. Die Belüftungseinrichtung weist einen Luftzuführkanal 3 auf, welcher mit einer hier nicht näher dargestellten Klimaanlage oder dergleichen verbunden ist. Der Luftzuführkanal 3 ist über einen Ausströmbereich 4 mit dem Innenraum des Kraftfahrzeugs verbindbar. Im Ausströmbereich 4 ist ein erstes Bauteil 5, welche mit der Instrumententafel fest verbunden ist, im Querschnitt dargestellt. Dieses Bauteil weist in Hochachse zur Papierebene verlaufende Stege 5.1 auf, welche einen im Wesentlichen parallelogrammartigen Querschnitt haben auf der vollen Länge des Steges. Die Parallelogramme sind hierbei mit ihrer kleineren Deckfläche nach unten gerichtet, so dass sich seitliche Schrägen ergeben, welche linksseitig von links oben nach rechts unten und rechtsseitig von rechts oben nach links unten verlaufen. Es handelt sich hierbei um erfindungsgemäße "Schließflächen" zur Berührung mit einem zweiten Bauteil 6.

Dieses zweite Bauteil 6 ist ebenfalls gitterförmig ausgeführt, d.h. es besteht aus mehreren parallel nebeneinander liegenden Stegen. Diese Stege können verschiedene Querschnittsformen aufweisen. Möglich ist eine Stegform mit parallelogrammartigem Querschnitt 6.1, alternativ sind auch im Querschnitt dreieckige Stege 6.2 möglich. Wesentlich ist, dass die Stege 6.1 bzw. 6.2 komplementär zu den Stegen 5.1 des ersten Bauteils 5 ausgebildet sind. Die parallelogrammartigen Stege 6.1 weisen hierzu die kleinere Deckfläche an der Oberseite und die größere Deckfläche an der Unterseite auf, so dass die seitlichen Flächen (welche als "Schließflächen" dienen) auf der linken Seite von oben rechts nach unten links und auf der rechten Seite des Parallelogrammquerschnittes von oben links nach unten rechts verlaufen. Ein entsprechender Verlauf ist auch bei dem Steg 6.2 gegeben.

In der in Fig. 1a gezeigten Ausführungsform ist jeweils die rechte Seitenfläche der Stege 6.1 bzw. 6.2 an die Stege 5.1 angrenzend. Damit berühren sich die jeweiligen komplementären Seitenflächen 5a, 6a. Dies führt dazu, dass jeweils in diesem Bereich ein Luftdurchtritt nicht möglich ist. Entlang der linken Seitenfläche der Stege 6.1 bzw. 6.2 bildet sich jedoch ein Spalt zum Austritt von Luftströmungen 8 in den Innenraum 2. Diese Luftströmungen haben einen vorgegebenen Winkel, welcher dadurch entsteht, dass die ausströmende Luft entlang der linken Seitenflächen der Stege 6.1 und 6.2 sowie der rechten Seitenflächen der Stege 5.1 des ersten Bauteils 5 geführt wird. Es ergibt sich somit eine Strömung 8, welche im Wesentlichen in den Fahrzeuginnenraum, zu den Fahrzeuginsassen hin, gerichtet ist.

Fig. 1b zeigt einen weiteren Verschiebungszustand von ersten Bauteil 5 zu zweitem Bauteil 6 (zur Vereinfachung ist hier ein einheitlicher dreieckiger Querschnitt der Stege 6.2 gezeigt).

In der Mittelebene 12 weisen die Stege 6.2 eine geringere Breite auf als der Abstand zwischen den einzelnen Stegen 5.1. Hierdurch ergibt sich der Umstand, dass bei translatorischer Verschiebung der Stege 6.2 n der Ebene 12 die Spalte zwischen den Stegen 5.1 jeweils größer ist als die Breite der Stege 6.2 in der Ebene 12. Hierdurch verbleibt also (solange sich die Stege 5.1 bzw. 6.2 in der in Fig. 1b bzw. 1a gezeigten Höhenanordnung zueinander befinden (d.h. dass beide ihr Mittelniveau in der Ebene 12 haben) stets ein Spalt. Dieser war durch die Seitenflächen in Fig. 1a so ausgebildet, dass Luftströmungen 8 entstanden. In Fig. 1b sind nun die Schließflächen die Flächen 5b (d.h. die rechten Seitenflächen der Stege 5.1) und 6b (d.h. die linken Seitenflächen der Stege 6.2). Dies sind also die Flächen, die in Fig. 1a zur Leitung des Luftstromes 8 gedient haben.

In Fig. 1b sind die Verhältnisse also umgekehrt. Die in Fig. 1a gezeigten Schließflächen dienen nun zur Leitung eines Luftstromes 9, während die in Fig. 1a zur Leitung des Luftstromes 8 dienenden Seitenflächen nun als Schließflächen dienen. Es ergibt sich also hier (analog zu Fig. 1a) ein Luftstrom 9, welcher in Richtung der Windschutzscheibe 10 gerichtet ist und somit zur "Enteisung"/"defrosten" der Windschutzscheibe 10 dienen kann.

Prinzipiell sind viele Möglichkeiten gegeben, die Stege 6.2 (bzw. 6.1) gegenüber den Stegen 5.1 zu verschieben, d.h. das erste zu dem zweiten Bauteil relativ zu bewegen. Es ist möglich, z.B. das erste Bauteil 5 fest mit der Innenraumverkleidung des Kraftfahrzeugs zu verbinden und das zweite Bauteil 6 hierzu schwenkbar bzw. in der Ebene 12 verschieblich anzuordnen. Außerdem ist es möglich, die beiden Bauteile auch in ihrem Höhenniveau bezüglich der Ebene 12 zu verschieben bzw. zu verschwenken, um auf diese Weise den Spaltraum für durchgehende Luftströmungen zu verkleinern.

Fig. 2a zeigt eine weitere Stellung der erfindungsgemäßen Belüftungseinrichtung. Hierbei sind die (diesmal parallelogrammartig ausgeführten) Stege 6.1 in der Mittellage zwischen den Stegen 5.1 angeordnet. Hierdurch ergibt sich an den Seitenflächen der Stege 6.1 beidseitig ein Spaltraum zum Durchführen von Luft. Der Spaltraum ist deutlich enger als nach Fign. 1a und 1b und die einen Steg 6.1 jeweils beidseitig umströmenden Luftströmungen treffen oberhalb des Steges 6.1 aufeinander, so dass es dort zu einer Verwirbelung kommt und eine "diffuse" Luftströmung entsteht, welche weder direkt auf die Windschutzscheibe noch direkt in den Fahrzeuginnenraum gerichtet ist. Hierdurch ergibt sich der Vorteil, dass für Fahrzeuginsassen kein subjektives "Anströmen" wahrnehmbar ist und trotzdem die gewünschte Luftumwälzung im Fahrzeuginnenraum ermöglicht wird.

In Fign. 1a und 2a wurden bisher Verschiebungen von Teilen des zweiten Bauteils (6.1 bzw. 6.2) gezeigt. Bei sämtlichen Ausführungsformen sind jedoch zusätzliche Bewegungsmöglichkeiten gegeben, etwa durch eine relative Höhenverschiebung (senkrecht zu Ebene 12) des zweiten Bauteils gegenüber dem ersten Bauteil.

Fig. 2b zeigt einen weiteren Verschiebungszustand der in Fig. 2a gezeigten Belüftungseinrichtung. Hierbei werden die Stege 6.1 (also das zweite Bauteil 6) gegenüber dem ersten Bauteil bzw. den ersten Stegen 5.1 in der Höhe verschoben, erhalten also ein größeres Höhenniveau gegenüber der Ebene 12. Hierdurch wird der Spaltraum zwischen den komplementären Stegen verschlossen, so dass durch den Ausströmbereich 4 keine Luft mehr von dem Luftzuführkanal in den Fahrzeuginnenraum gelangen kann.

Schließlich zeigt Fig. 3 eine weitere Ausführungsform einer erfindungsgemäßen Belüftungseinrichtung. Hierbei sind jeweils dreieckförmige Stege 6.2 mit relativ geringer Querschnittsfläche vorgesehen. Ein drittes Bauteil 11, welches auf Stegen 5.1 des zweiten Bauteils 5 aufliegt, ist in Richtung 13 translatorisch verschiebbar um somit die Spalte zwischen den Stegen 5.1 vollständig zu verschließen und somit (analog in der Wirkung zu Fig. 2b) den Luftdurchgang durch den Ausströmbereich 4 zu verhindern.

Die oben gezeigten Zeichnungen sollten das Prinzip dieser Figuren erläutern. Sämtliche der dort gezeigten Gegenstände können aus beliebigen Materialien, z.B. Kunststoffen wie Polypropylen oder Metallen wie Aluminiumdruckguss bestehen.

Fign. 4a und 4b zeigen eine konstruktive Ausgestaltung einer Belüftungseinrichtung, welche schematisch bereits in Fign. 2a und 2b gezeigt wurde. Hier ist wesentlich, dass die Stege 6.1 über einen Feder-Hebemechanismus (Feder 21) höhenverstellbar zu den Stegen 5.1 sind und somit eine Öffnung bzw. ein Verschluss des Ausströmbereiches möglich ist. Hierbei sind die Stege 6.1 des zweiten Bauteils über einen Träger in Form von Doppelgelenken verbunden, wobei die Doppelgelenke wiederum durch einen Steg miteinander verbunden sind.

Die in Fig. 4a gezeigte Mittellage zeigt hierbei den geschlossenen Zustand, bei dem eine Feder die stabile Mittellage hält.

In Fig. 4b ist ein geöffneter Zustand gezeigt, bei welchem eine Anströmung in Richtung Windschutzscheibe erfolgt, alternativ ist durch ein Kippen der Stege 6.1 in der Ebene 12 entgegengesetzte Richtung eine Anströmung des Innenraums möglich.

Eine bevorzugte Ausführungsform der Erfindung wird nun in den Figuren 5 bis 9 näher erläutert. Hiermit ist eine Bewegung des zweiten Bauteils mit seinen Stegen gemäß Fign. 1a-2b darstellbar.

Fig. 5a zeigt schematisch den zu erklärenden Bewegungsmechanismus. Hierbei sind Lüftungsaustritte, gebildet aus erstem und zweiten Bauteil 5, 6 an der Oberseite gezeigt gemäß Fign. 1a-2b. Dort ist ein feststehendes erstes Bauteil 5 sowie ein hierzu bewegliches zweites Bauteil 6 vorgesehen. An dem ersten festen Bauteil 5 befestigt ist auf der vom Fahrzeuginnenraum abgewandten Seite zweimal ein Zahnkranz 16 vorgesehen, dessen Zähne nach unten hin weisen. An diesem Bauteil sind außerdem zwei Führungen 15 für einen Träger 14 vorgesehen.

Der Träger 14 zeigt außerdem Zahnräder 17, welche mit den Zahnkränzen 16 in Eingriff sind. Die Lagerachsen dieser Zahnräder 17 laufen in den schienenförmigen Führungen 15. An den Zahnrädern 17 sind exzentrisch Aufhängungszapfen 18 angebracht, welche mit dem zweiten Bauteil (also Stegen 6.1 bzw. 6.2) verbunden sind. Hierzu sei ausgeführt, dass die Stege 6.1 bzw. 6.2 durch entsprechende Querträger miteinander verbunden sind, so dass es theoretisch ausreicht, lediglich einen einzigen Aufhängungszapfen 18 vorzusehen.

Von den Aufhängungszapfen 18 ausgehend ist außerdem eine Kinematikkurve (Bewegungskontur) des hier gezeigten Mechanismusses zum Antrieb des zweiten Bauteils gezeigt. Hierbei handelt es sich um eine "bergförmige" Kurve mit gekrümmten "Bergflanken". In der in Fig. 5 gezeigten Stellung liegen die linken Flächen der Stege 6.1 an den rechten Flächen der Stege 5.1 (analog zu Fig. 1b). An der Bergspitze findet ein Verschluss des Lüftungssystems statt (analog zu Fig. 2b). Am rechten unteren Ende der rechten Bergflanke ist ein der Fig. 1a entsprechender Bewegungszustand gezeigt.

Der Träger 14 weist auf seiner Unterseite einen weiteren Zahnkranz 19 auf, welcher mit einem Antriebszahnrad eines Antriebs 20 eingreifend verbunden ist. Das Antriebszahnrad 20 wird von einem Stellantrieb z.B. einem Schrittmotor angetrieben, welcher nach Anweisungen einer Klimaautomatik bzw. des Fahrzeugbedieners die Bewegungszustände und damit Lüftungszustände steuert.

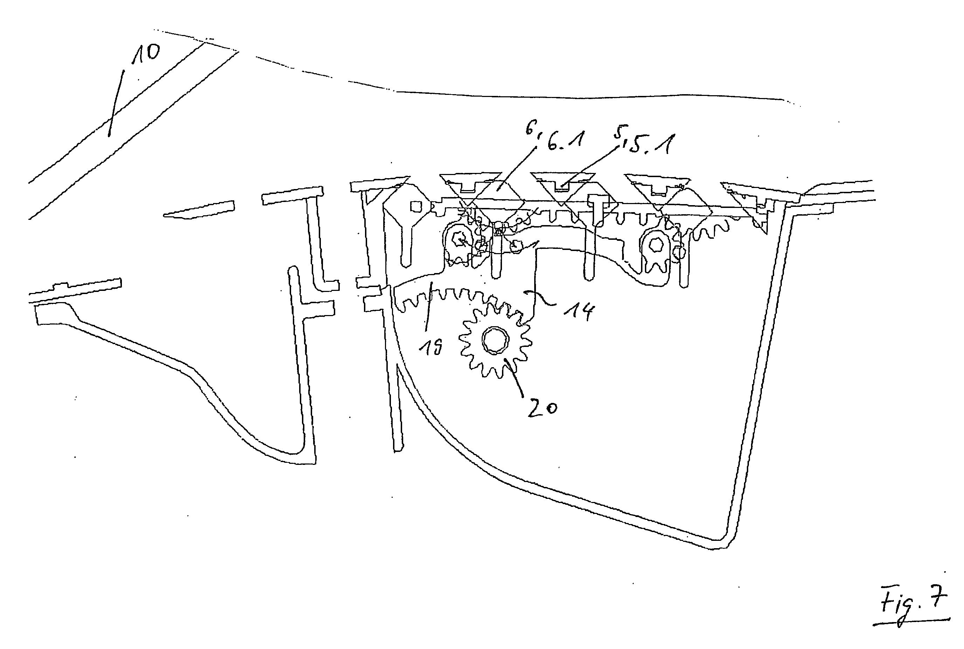

Fig. 6 zeigt nochmals im Detail einen Fig. 1b entsprechenden Bewegungszustand. Hierbei sind die Stege 5.1 mit ihren linken Seitenflächen an den rechten Seitenflächen der ersten Stege 5.1 angeordnet. Die zweiten Stege 6.1 sind über eine hier nicht dargestellte Querrippe miteinander fest verbunden. Hierdurch wird eine Ausströmrichtung 9 in Richtung der Windschutzscheibe 10 ermöglicht.

Wie bereits oben beschrieben, ist ein Aufhängungszapfen 18 mit den Stegen 6.1 des zweiten Bauteils verbunden. Die Bewegung dieses Zapfens ist in Fig. 6 schematisch durch drei Kreise (bezeichnet mit "a", "b" bzw. "c") gezeigt. In der in Fig. 6 gezeigten Stellung ist der Bewegungszapfen in der Stellung "a", welche also Fig. 1b entsprechen würde. Die Stellung "c" entspricht im Wesentlichen Fig. 2b und die Stellung "b" im Wesentlichen der Stellung in Fig. 1a, siehe hierzu auch die ergänzenden Erläuterungen zu Fig. 5.

Zur weiteren Verdeutlichung ist nochmals in der oberen rechten Ecke von Fig. 6 eine vergrößerte Darstellung der epizykloiden Bewegungskurve zwischen den Bewegungszuständen "a", "b" und "c" gezeigt.

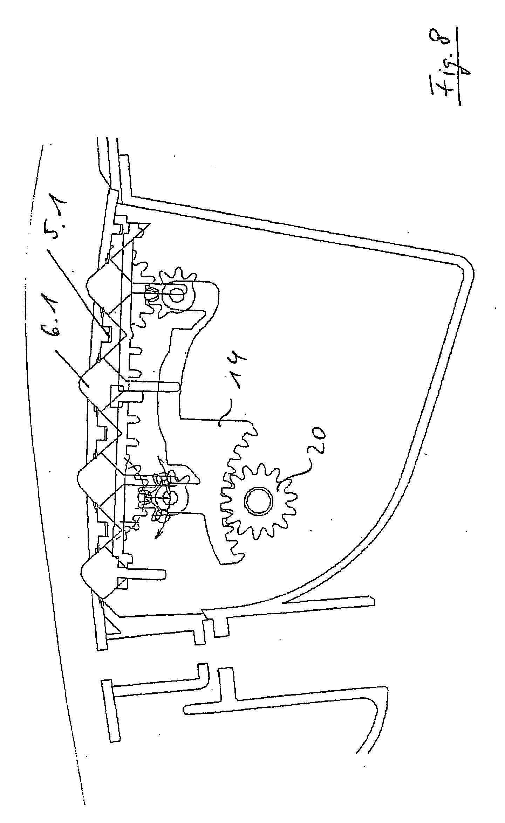

Fig. 7 zeigt nochmals den Zustand aus Fig. 6, allerdings mit einem anderen Maßstab, so dass das Gesamtbild inklusive Windschutzscheibe 10 hier ersichtlich ist.

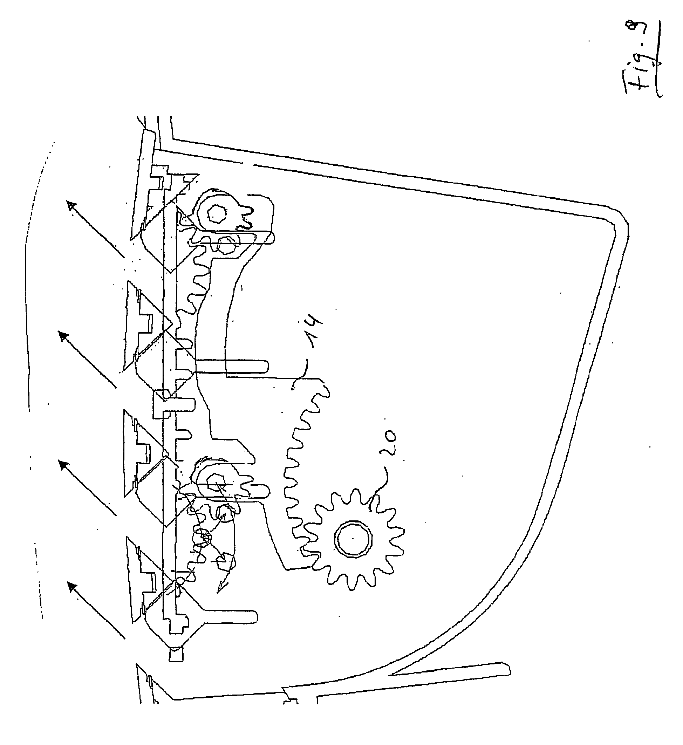

Fig. 8 zeigt den der Fig. 2b bzw. dem Bewegungszustand in "b" entsprechenden Zustand, bei welchem erstes und zweites Bauteil einander verschließen.

Schließlich ist in Fig. 9 der in Fig. 1a entsprechende Bewegungszustand gezeigt.

Es ist also hier eine Belüftungseinrichtung gezeigt, bei welcher das erste und das zweite Bauteil längsgitterförmig ausgestaltet sind und Stege des ersten und zweiten Bauteils alternierend zueinander angeordnet sind. Hierbei ist das zweite Bauteil 6 gegenüber dem ersten Bauteil 5 zur Erzeugung unterschiedlicher Strömungsrichtungen 8, 9 seitlich (in Ebene 10) und zum Verschluss der Strömung (senkrecht dazu) in der Höhe verschieblich angeordnet.

Wesentlich für den hier gezeigten Bewegungsmechanismus ist, dass das zweite Bauteil 6 an einem Träger 14 befestigt ist, wobei der Träger so geführt ist, dass das zweite Bauteil gegenüber dem ersten Bauteil seitlich und/oder in der Höhe verschieblich ist. Hierbei wird in der Ausführungsform nach Fign. 5-9 der Träger 14 über bewegliche Reibpaarungen, vorzugsweise Zahnräder (selbstverständlich sind auch z.B. aufeinander abrollende Gummiflächen etc. möglich) bewegt. Hierzu sind erste und zweite Reibpaarungen vorgesehen, zur Führung des Trägers ist mindestens eine Führungsschiene vorgesehen. Hierbei ist der Träger vorzugsweise so geführt, dass eine epizykloide Bewegung gegeben ist, wobei in einem ersten Bewegungszustand "a" nur erste Schließflächen des ersten und des zweiten Bauteils aufeinanderliegen (entsprechend Zustand in Fig. 1b). In einem zweiten Verschiebungszustand nur zweite Schließflächen des ersten und zweiten Bauteils aneinanderliegen ("b", s. auch Fig. 1a) und in einem dazwischenliegenden Bewegungszustand ("c") nur erste und zweite Bewegungsflächen, so dass ein vollkommener Verschluss gegeben ist.

Die Vorteile des hier gezeigten Antriebs mit den gekrümmten Bewegungskurven liegt darin, dass diese Rollbewegung nur wenig Reibung erzeugt und auch mit kleinen Schrittmotoren exakt darstellbar ist. Außerdem wird ein Abheben der Stege/Prismen auf eine besonders schonende Weise erreicht, wodurch Kratzer an den empfindlichen Oberflächen vermieden werden.

## Patentansprüche

1. Belüftungseinrichtung (1), insbesondere für Kraftfahrzeug-Innenräume (2), mit einem Luftzuführkanal (3) sowie einem Ausströmbereich (4) zur Belüftung des Innenraums (2),
wobei im Ausströmbereich ein erstes (5) und ein zweites (6) Bauteil vorgesehen sind, welche relativ zueinander in verschiedene Verschiebungszustände (Fign. 1a, 1b) bringbar sind und in den unterschiedlichen Verschiebungszuständen jeweils unterschiedliche Schließflächen (5a, 6a; 5b, 6b) des ersten (5) und des zweiten (6) Bauteils aneinander liegen zur Realisierung von Luftströmungen (8; 9) in den Innenraum mit unterschiedlichen Ausströmwinkeln, **dadurch gekennzeichnet, dass** das zweite Bauteil (6) gegenüber dem ersten Bauteil (5) zur Erzeugung unterschiedlicher Strömungsrichtungen seitlich und zum Verschluss der Strömung in der Höhe verschieblich angeordnet ist.

2. Belüftungseinrichtung nach Anspruch 1, **dadurch gekennzeichnet, dass** das erste (5) und/oder zweite (6) Bauteil eine Gitterform aufweisen.

3. Belüftungseinrichtung nach einem der vorhergehenden Ansprüche, **dadurch gekennzeichnet, dass** das erste und/oder das zweite Bauteil prismatisch geformte Stege (5.1; 6.1, 6.2) aufweisen.

4. Belüftungseinrichtung nach einem der vorhergehenden Ansprüche, **dadurch gekennzeichnet, dass** das zweite Bauteil (6) beabstandet mehrere Stege mit dreieckförmigem Querschnitt aufweist.

5. Belüftungseinrichtung nach einem der vorhergehenden Ansprüche, **dadurch gekennzeichnet, dass** das erste (5) und/oder zweite (6) Bauteil beweglich sind.

6. Belüftungseinrichtung nach einem der vorhergehenden Ansprüche, **dadurch gekennzeichnet, dass** der Ausströmbereich im Innenraum (2) eines Kraftfahrzeuges angeordnet ist und sich an eine Windschutzscheibe (10) anschließt.

7. Belüftungseinrichtung nach Anspruch 6, **dadurch gekennzeichnet, dass** mindestens zwei Verschiebungszustände einstellbar sind, wobei im zweiten Verschiebungszustand (Fig. 1b) eine Luftströmung zur Windschutzscheibe hin gerichtet ist und im ersten Verschiebungszustand (Fig. 1a) die Luftströmung stärker zum Zentrum des FahrzeugInnenraums hin gerichtet ist.

8. Belüftungseinrichtung nach einem der vorhergehenden Ansprüche, **dadurch gekennzeichnet, dass** ein weiterer Verschiebungszustand (Fig. 2a) möglich ist, bei welchem keine der Schließflächen aneinander liegen.

9. Belüftungseinrichtung nach einem der vorhergehenden Ansprüche, **dadurch gekennzeichnet, dass** ein weiterer Verschiebungszustand (Fig. 2b) gegeben ist, bei welchem sämtliche der Schließflächen aneinander liegen.

10. Belüftungseinrichtung nach einem der vorhergehenden Ansprüche, **dadurch gekennzeichnet, dass** ein drittes Bauteil (13) vorgesehen ist, welches zum Verschließen des Ausströmbereichs unabhängig von den Bewegungszuständen des ersten (5) und/oder zweiten (6) Bauteils beweglich ist.

11. Belüftungseinrichtung nach einem der vorhergehenden Ansprüche, **dadurch gekennzeichnet, dass** das erste (5), zweite (6) und/oder dritte (13) Bauteil aus Kunststoff oder Metall sind.

12. Belüftungseinrichtung nach einem der vorhergehenden Patentansprüche, **dadurch gekennzeichnet, dass** das erste (5) und/oder das zweite (6) Bauteil als im Wesentlichen ebene Gitter ausgeführt sind und mindestens zwei Verschiebungszustände ("a", "b"), bei denen jeweils unterschiedliche Schließflächen des ersten und des zweiten Bauteils aneinanderliegen, in einer Ebene (12) angeordnet sind.

13. Belüftungseinrichtung nach einem der vorhergehenden Ansprüche, **dadurch gekennzeichnet, dass** das erste (5) und das zweite (6) Bauteil im Wesentlichen prismatisch und/oder längsgitterförmig ausgestaltet sind und Stege (5.1, 6.1) des ersten und zweiten Bauteils alternierend zueinander angeordnet sind.

14. Belüftungseinrichtung nach einem der vorhergehenden Patentansprüche, **dadurch gekennzeichnet, dass** das zweite Bauteil (6) an einem Träger (14) befestigt ist, wobei der Träger so geführt ist, dass das zweite Bauteil (6) gegenüber dem ersten Bauteil (5) seitlich und/oder in der Höhe verschieblich ist.

15. Belüftungseinrichtung nach Patentanspruch 14, **dadurch gekennzeichnet, dass** der Träger über ein federgestütztes Doppelgelenk geführt ist (Fign. 4a, 4b).

16. Belüftungseinrichtung nach. Patentanspruch 15, **dadurch gekennzeichnet, dass** der Träger (14) über bewegliche Reibpaarungen, vorzugsweise Zahnräder, mit dem ersten Bauteil (5) beweglich verbunden ist, wobei erste Reibpaarungen (19, 20) mit einem Antrieb (20) zur Verstellung und zweite Reibpaarungen (16, 17) zur Verbindung mit dem ersten Bauteil vorgesehen sind.

17. Belüftungseinrichtung nach einem der Patentansprüche 14 bis 16, **dadurch gekennzeichnet, dass** der Träger (14) zusätzlich über eine Führungsschiene (15) mit dem ersten Bauteil (5) verbunden ist.

18. Belüftungseinrichtung nach einem der Patentansprüche 16 oder 17, **dadurch gekennzeichnet, dass** der Träger (14) so geführt ist, dass er eine epizykloide Bewegung vollführt, wobei in einem ersten Verschiebungszustand ("a") nur erste Schließflächen des ersten und zweiten Bauteils aneinanderliegen, in einem zweiten Verschiebungszustand ("b") nur zweite Schließflächen des ersten und zweiten Bauteils aneinanderliegen und einem dazwischenliegenden Bewegungszustand ("c") erste und zweite Bewegungsflächen aneinanderliegen.

## Claims

1. Ventilation means (1), especially for the interior of motor vehicles (2), with an air supply channel (3) as well as a venting area (4) for ventilating the interior (2), whereby a first (5) and a second (6) component are envisaged in the venting area, which can be positioned in different displacement positions relative to each other (Figs. 1a, 1b), whereby different closure surfaces (5a, 6a; 5b, 6b) of the first (5) and the second (6) components abut against each other in the different displacement positions to realise air flows (8; 9) with different venting angles into the interior, **characterised in that** the second component (6) is positioned displaceable to the side and the height of the closure of the flow in relation to the first component (5) for producing different flow directions.

2. Ventilation means according to Claim 1, **characterised in that** the first (5) and/or the second (6) component is of a grid shape.

3. Ventilation means according to one of the preceding Claims, **characterised in that** the first and/or the second component comprise prism-shaped bridges (5.1; 6.1, 6.2).

4. Ventilation means according to one of the preceding Claims, **characterised in that** the second component (6) comprises several bridges with a triangular cross-section spaced apart from each other.

5. Ventilation means according to one of the preceding Claims, **characterised in that** the first (5) and/or second (6) components are moveable.

6. Ventilation means according to one of the preceding Claims, **characterised in that** the venting area is located in the interior (2) of a motor vehicle adjacent to a windscreen (10).

7. Ventilation means according to Claim 6, **characterised in that** at least two displacement positions can be set, whereby an air stream is directed at the windscreen in the second displacement position (Fig. 1b), and whereby the air stream its directed more towards the centre of the vehicle interior in the first displacement position (Fig. 1a).

8. Ventilation means according to one of the preceding Claims, **characterised in that** a further displacement position (Fig. 2a) is provided, in which none of the closure surfaces abut against each other.

9. Ventilation means according to one of the preceding Claims, **characterised in that** a further displacement position (Fig. 2b) is provided, in which all of the closure surfaces abut against each other.

10. Ventilation means according to one of the preceding Claims, **characterised in that** a third component (13) is envisaged, which is moveable for closing the venting area irrespective of the movement condition of the first (5) and/or the second (6) component.

11. Ventilation means according to one of the preceding Claims, **characterised in that** the first (5), second (6) and/or third (13) components are made of plastic or metal.

12. Ventilation means according to one of the preceding Claims, **characterised in that** the first (5) and/or the second (6) components consist of a substantially planar grid, and that at least two displacement positions ("a", "b") are disposed aldng a plane (12), whereby different closure surfaces of the first and the second components abut against each other.

13. Ventilation means according to one of the preceding Claims, **characterised in that** the first (5) and the second (6) component are substantially prism-shaped and/or consist of a longitudinal grid, and **in that** bridges (5.1, 6.1) of the first and second component are disposed alternately.

14. Ventilation means according to one of the preceding Claims, **characterised in that** the second component (6) is affixed to a support (14), whereby the support is designed in such a way that the second component (6) can be displaced in relation to the first component (5) to the side and/or in height.

15. Ventilation means according to Claim 14, **characterised in that** the support extends over a spring-supported double joint (Figs. 4a, 4b).

16. Ventilation means according to Claim 15, **characterised in that** the support (14) extends over moveable friction pairings, preferably gear wheels, and is moveably connected with the first component (5), whereby first friction pairings (19, 20) with a drive (20) for adjustment, and second friction pairings (16, 17) for connection with the first component are envisaged.

17. Ventilation means according to Claims 14 to 16, **characterised in that** the support (14) is additionally connected via a guide rail (15) with the first component (5).

18. Ventilation means according to one of the Claims 16 or 17, **characterised in that** the support (14) extends in such a way that the same executes an epicyclical movement, whereby only first closure surfaces of the first and second components abut against each other in a first displacement position ("a"), only second closure surfaces of the first and second components abut against each other in a second displacement position ("b"), and first and second movement surfaces abut against each other in an interim movement position ("c").

## Revendications

1. Dispositif de ventilation (1), en particulier pour des habitacles de véhicules (2), comportant un canal d'amenée d'air (3) ainsi qu'une zone d'émission (4) permettant de ventiler l'habitacle (2), des premier (5) et deuxième (6) composants étant prévus dans la zone d'émission, lesquels peuvent être amenés dans des états de déplacement différents l'un par rapport à l'autre (figures 1a, 1b) et, dans les états de déplacement différents, des surfaces de fermeture différentes (5a, 6a ; 5b, 6b) respectives des premier (5) et deuxième (6) composants étant adjacentes afin d'obtenir des écoulements d'air (8 ; 9) dans l'habitacle selon des angles d'émission différents,
**caractérisé en ce que** le deuxième composant (6) est disposé de manière à pouvoir être déplacé par rapport au premier composant (5), latéralement afin d'obtenir des orientations d'écoulement différentes, et en hauteur afin de bloquer l'écoulement.

2. Dispositif de ventilation selon la revendication 1, **caractérisé en ce que** les premier (5) et/ou deuxième (6) composants présentent une forme de grille.

3. Dispositif de ventilation selon l'une quelconque des revendications précédentes, **caractérisé en ce que** les premier et/ou deuxième composants présentent des traverses (5.1 ; 6.1, 6.2) conçues sous forme prismatique.

4. Dispositif de ventilation selon l'une quelconque des revendications précédentes, **caractérisé en ce que** le deuxième composant (6) présente plusieurs traverses espacées avec une section triangulaire.

5. Dispositif de ventilation selon l'une quelconque des revendications précédentes, **caractérisé en ce que** les premier (5) et/ou deuxième (6) composant(s) est/sont mobile(s).

6. Dispositif de ventilation selon l'une quelconque des revendications précédentes, **caractérisé en ce que** la zone d'émission est disposée dans l'habitacle (2) d'un véhicule et est adjacente à un pare-brise (10).

7. Dispositif de ventilation selon la revendication 6, **caractérisé en ce qu'**au moins deux états de déplacement peuvent être réglés, un écoulement d'air étant orienté vers le pare-brise dans le deuxième état de déplacement (figure 1b) et, dans le premier état de déplacement (figure 1a), l'écoulement d'air étant davantage orienté vers le centre de l'habitacle du véhicule.

8. Dispositif de ventilation selon l'une quelconque des revendications précédentes, **caractérisé en ce qu'**un autre état de déplacement (figure 2a) est possible, dans lequel aucune des surfaces de fermeture n'est adjacente.

9. Dispositif de ventilation selon l'une quelconque des revendications précédentes, **caractérisé en ce qu'**on envisage un autre état de déplacement (figure 2b), dans lequel l'ensemble des surfaces de fermeture sont adjacentes les unes aux autres.

10. Dispositif de ventilation selon l'une quelconque des revendications précédentes, **caractérisé en ce qu'**il est prévu un troisième composant (13), qui est mobile afin de fermer la zone d'émission, indépendamment des états de déplacement des premier (5) et/ou deuxième (6) composants.

11. Dispositif de ventilation selon l'une quelconque des revendications précédentes, **caractérisé en ce que** les premier (5), deuxième (6) et/ou troisième (13) composants sont constitués de matière plastique ou de métal.

12. Dispositif de ventilation selon l'une quelconque des revendications précédentes, **caractérisé en ce que** les premier (5) et/ou deuxième (6) composants sont configurés sous la forme d'une grille sensiblement plane, et dans un plan (12) se trouvent au moins deux états de déplacement (« a », « b »), dans lesquels les différentes surfaces de fermeture des premier et deuxième composants sont respectivement adjacentes.

13. Dispositif de ventilation selon l'une quelconque des revendications précédentes, **caractérisé en ce que** les premier (5) et deuxième (6) composants sont configurés sensiblement sous forme prismatique et/ou en forme de grille longitudinale, et des traverses (5.1, 6.1) des premier et deuxième composants sont disposées de manière alternée l'une par rapport à l'autre.

14. Dispositif de ventilation selon l'une quelconque des revendications précédentes, **caractérisé en ce que** le deuxième composant (6) est fixé sur un support (14), le support étant guidé de telle sorte que le deuxième composant (6) peut être déplacé latéralement et/ou en hauteur par rapport au premier composant (5).

15. Dispositif de ventilation selon la revendication 14, **caractérisé en ce que** le support est guidé par l'intermédiaire d'une articulation double à ressort (figures 4a, 4b).

16. Dispositif de ventilation selon la revendication 15, **caractérisé en ce que** le support (14) est relié de manière mobile au premier composant (5) par l'intermédiaire de couples de frottement mobiles, de préférence des roues dentées, alors qu'il est prévu des premiers couples de frottement (19, 20) avec un entraînement (20) pour le réglage et des deuxièmes couples de frottement (16, 17) pour le raccordement avec le premier composant.

17. Dispositif de ventilation selon l'une quelconque des revendications 14 à 16, **caractérisé en ce que** le support (14) est en outre relié au premier composant (5) par l'intermédiaire d'un rail de guidage (15).

18. Dispositif de ventilation selon l'une quelconque des revendications 16 ou 17, **caractérisé en ce que** le support (14) est guidé de telle sorte qu'il effectue un mouvement épicycloïde, dans un premier état de déplacement (« a »), seules les premières surfaces de fermeture des premier et deuxième composants étant adjacentes, dans un deuxième état de déplacement («b »), seules les deuxièmes surfaces de fermeture des premier et deuxième composants étant adjacentes et, dans un état de déplacement intermédiaire (« c »), les première et deuxième surfaces de déplacement étant adjacentes l'une à l'autre.
